# EUROPÄISCHE PATENTANMELDUNG

(11) **EP 4 704 323 A1**
(43) Veröffentlichungstag der Anmeldung: **04.03.2026**
(21) Anmeldenummer: 25193453.5
(22) Anmeldetag: 01.08.2025
(51) Int. Cl.: H02M 7/5395, H02M 1/42, H02M 1/00, H02P 5/74

(54) **VERFAHREN ZUM STEUERN EINES VERDICHTERSYSTEMS, VERDICHTER ZUM VERDICHTEN EINES ARBEITSMEDIUMS, VERDICHTERSYSTEM UND KÄLTEKREISLAUFSYSTEM ZUR DURCHFÜHRUNG EINES KÄLTEKREISPROZESSES**

(30) Priorität: 02.09.2024 DE 102024125030
(71) Anmelder: Viessmann Holding International GmbH, 35108 Allendorf (Eder) (DE)
(72) Erfinder: GRUBER, Artjom, 34270 Schauenburg (DE); GRUBER, Vitali, 34270 Schauenburg (DE)
(74) Vertreter: MERH-IP Matias Erny Reichl Hoffmann Patentanwälte PartG mbB

(57) **Zusammenfassung**

Die Erfindung stellt ein Verfahren zum Steuern eines Verdichtersystems 1000 bereit, das insbesondere Teil eines Kältekreislaufsystems ist, und das einen elektrisch betriebenen Verdichter 1, der zum Verdichten eines Arbeitsmediums eingerichtet ist, und einen weiteren elektrischen Verbraucher 2 umfasst. Der Verdichter 1 umfasst wiederum einen Elektromotor 11 zum Bereitstellen einer mechanischen Bewegung zum Verdichten des Arbeitsmediums, einen Wechselrichter 12, der den Elektromotor 11 mit ein- oder mehrphasigem Wechselstrom versorgt, einen Leistungsfaktorkorrekturfilter 13 (PFC, engl. Power Factor Compensation), der den Wechselrichter 12 mit Gleichstrom versorgt und dessen Stromeingang zur Energieversorgung des Verdichters 1 mit einem Netzanschlusspunkt 2000 einer Wechselstrom-bereitstellenden Netzstromquelle verbunden ist Der weitere elektrische Verbraucher 2 ist zur Energieversorgung an dem selben Netzanschlusspunkt 2000 angeschlossen wie der Leistungsfaktorkorrekturfilter 13. Das Verfahren umfasst ein Betreiben des Verdichtersystems 1000 mit elektrischem Strom aus der Netzstromquelle, ein Ermitteln zumindest eines Stromkennwerts des weiteren Verbrauchers 2, der eine Stromaufnahme des weiteren Verbrauchers 2 beschreibt, und ein Steuern des Leistungsfaktorkorrekturfilters 13 des Verdichters 1 zumindest in Abhängigkeit des ermittelten zumindest einen Stromkennwerts des weiteren Verbrauchers 2.

## Beschreibung

### Technisches Gebiet

Die vorliegende Erfindung betrifft ein Verfahren zum Steuern eines Verdichtersystems, einen Verdichter zum Verdichten eines Arbeitsmediums und ein Kältekreislaufsystem zur Durchführung eines Kältekreisprozesses.

### Hintergrund der Erfindung

Aus dem Stand der Technik sind Systeme zur Heizung, Lüftung und Klimatisierung, sog. HLK-Systeme (engl. HVAC-systems) bekannt, mit denen unter anderem eine gezielte und auch möglichst effiziente Steuerung von Temperatur, Luftfeuchtigkeit oder Luftströmung innerhalb eines Gebäudes oder Teilbereichen des selbigen umgesetzt werden soll.

In jüngster Zeit kommen hierzu vermehrt vor allem in Privathaushalten Kältekreislaufsysteme, zum Beispiel in From von Wärmepumpen oder Kältemaschinen, als Bestandteil solcher HLK-Systeme zum Einsatz, wahlweise als Teil eines Heizungssystems des HLK-Systems zum Erhöhen von Raumtemperaturen, aber auch als Teil eines Klimatisierungssystems des HLK-Systems zum Absenken von Raumtemperaturen.

Bei solchen Kältekreislaufsystemen handelt es sich um thermodynamisch operierende Systeme, die über eine Verbindung zu einer Wärmequellenanlage verschiedene Umgebungsenergiequellen, beispielsweise in Form von Aerothermie, Geothermie oder Hydrothermie, zum Heizen und/oder zum Klimatisieren nutzbar machen. Hierzu ist das Kältekreislaufsystemen zur Durchführung eines thermodynamischen Kältekreisprozesses eingerichtet, im Zuge dessen ein Arbeitsmedium des Kältekreislaufsystems gemäß der allgemein bekannten Prinzipien verdichtet und entspannt sowie erwärmt und abgekühlt wird, derart, dass an zumindest einer Stelle des Kältekreislaufsystems Wärmeenergie auf das Arbeitsmedium übertragen werden kann und an zumindest einer weiteren Stelle dem Arbeitsmedium Wärmeenergie entzogen werden kann, um so einen Wärmefluss aus oder in ein Zielsystem, z. B. ein Raum eines Gebäudes, umzusetzen.

In den Fällen, in denen dem Zielsystem Wärmeenergie entzogen werden soll, beispielsweise im Bereich der Klimatisierung, wird das Kältekreislaufsystem oft auch als Kältemaschine bezeichnet, wohingegen in Fällen, in denen dem Zielsystem Wärmeenergie zugeführt wird, oft auch von Wärmepumpen gesprochen wird.

Nachfolgend sollen sowohl solche Kältemaschinen als auch Wärmepumpen als unter dem Oberbegriff "Kältekreislaufsystem" zusammengefasst verstanden werden.

Wesentliches Element im Kältekreislaufsystem ist dabei der üblicherweise elektrisch betriebene Verdichter, über den das Arbeitsmedium verdichtet wird, um dessen Druck zu erhöhen. Der elektrische Verdichter ist zur Energieversorgung üblicherweise an einen Netzanschlusspunkt einer Wechselstrom-bereitstellende Netzstromquelle (nachfolgend auch Stromnetz genannt) angeschlossen.

Der Verdichter greift dabei den für den Betrieb notwendigen Strom aus der Netzstromquelle ab, wobei der abgegriffene Strom gewisse Grenzwerte, die insbesondere für Vielfache der Grundfrequenz des Stromnetzes definiert werden und damit Grenzwerte eines Oberwellengehalts sind, nicht überschreiten darf, da sich der Betrieb des Verdichters ansonsten negativ auf das Stromnetz selbst auswirkt Diese Grenzwerte sind in der Regel auch gesetzlich vorgegeben.

Im Stand der Technik kommen zur Einhalt dieser Grenzwerte üblicherweise zusätzliche induktive Elemente zum Einsatz, die in einer Schnittstelle zum Netzanschlusspunkt vorgesehen sind und die den abgegriffenen Strom dämpfen, um den Oberwellengehalt zu reduzieren.

Derartige Anordnungen sind jedoch stark verlustbehaftet und im Hinblick auf sich ändernde Betriebszustände und/oder Umgebungsbedingungen wenig flexibel. Ferner entstehen durch diese zusätzliche Kosten und sie nehmen Bauraum in Anspruch

### Zusammenfassung

Eine Aufgabe der vorliegenden Erfindung ist es daher, eine effizientere, insbesondere kostengünstigere und bauraumsparendere, und flexiblere Möglichkeit bereitzustellen, mit der für das Stromnetz negative Effekte beim Betrieb eines Verdichtersystems möglichst ohne Energieverluste reduziert werden können, um so insbesondere die gesetzlichen Vorgaben einzuhalten.

Zur Lösung dieser Aufgabe wird ein Verfahren nach Anspruch 1, ein Verdichter nach Anspruch 15, ein Verdichtersystem nach Anspruch 16 und ein Kältekreislaufsystem nach Anspruch 17 bereitgestellt.

Die jeweiligen abhängigen Ansprüche beziehen sich dabei auf bevorzugte Ausführungsformen, die jeweils für sich genommen oder in Kombination bereitgestellt werden können.

Gemäß einem Aspekt der Erfindung wird ein Verfahren zum Steuern eines Verdichtersystems bereitgestellt, das insbesondere Teil eines Kältekreislaufsystems ist, und das einen elektrisch betriebenen Verdichter, der zum Verdichten eines Arbeitsmediums eingerichtet ist, und einen weiteren elektrischen Verbraucher umfasst Der Verdichter umfasst wiederum einen Elektromotor zum Bereitstellen einer mechanischen Bewegung zum Verdichten des Arbeitsmediums, einen Wechselrichter, der den Elektromotor mit ein- oder mehrphasigem Wechselstrom versorgt, einen Leistungsfaktorkorrekturfilter (PFC, engl. Power Factor Compensation), der den Wechselrichter mit Gleichstrom versorgt und dessen Stromeingang zur Energieversorgung des Verdichters mit einem Netzanschlusspunkt einer Wechselstrom-bereitstellenden Netzstromquelle verbunden ist Der weitere elektrische Verbraucher ist zur Energieversorgung an dem selben Netzanschlusspunkt angeschlossen wie der Leistungsfaktorkorrekturfilter. Das Verfahren umfasst ein Betreiben des Verdichtersystems mit elektrischem Strom aus der Netzstromquelle, ein Ermitteln zumindest eines Stromkennwerts des weiteren Verbrauchers, der eine Stromaufnahme des weiteren Verbrauchers beschreibt, und ein Steuern des Leistungsfaktorkorrekturfilters des Verdichters zumindest in Abhängigkeit des ermittelten zumindest einen Stromkennwerts des weiteren Verbrauchers.

Vorzugsweise werden mehrere Stromkennwerte des weiteren Verbrauchers ermittelt, sodass das Ermitteln des zumindest einen Stromkennwerts des weiteren Verbrauchers ein Ermitteln von mehreren Stromkennwerten des Verbrauchers ist, die eine Stromaufnahme des weiteren Verbrauchers beschreiben, und das Steuern des Leistungsfaktorkorrekturfilters des Verdichters entsprechend zumindest in Abhängigkeit der ermittelten mehreren Stromkennwerte des weiteren Verbrauchers erfolgt.

Im Rahmen dieser Anmeldung sollen, abweichend vom üblichen Gebrauch des Begriffs "Verdichter" und so wie in Anspruch 1 definiert, auch die der elektro-mechanischen Komponente (Elektromotor) vorgeschaltete Leistungselektronik (Leistungsfaktorkorrekturfilter) als Teil des Verdichters verstanden werden.

Leistungsfaktorkorrekturfilter, auch mit PFC abgekürzt, sind elektrische oder elektronische Schaltungen, welche den durch Verzerrungsblindleistung verminderten Leistungsfaktor erhöhen, wobei es sich bei dem Leistungskorrekturfilter des bereitgestellten Verdichtersystems vorzugsweise um einen aktiven Leistungskorrekturfilter handelt.

Durch das erfindungsgemäße Vorgehen kann eine Steuerung eines Verdichtersystems auf Basis des Leistungsfaktorkorrekturfilters des darin umfassten Verdichters umgesetzt werden, um so den Leistungsfaktor des gesamten Verdichtersystems, also inklusive des weiteren Verbrauchers, zu erhöhen.

Besagter weiterer Verbraucher, der an dem selben Netzanschlusspunkt wie auch der Verdichter angeschlossen ist, umfasst üblicherweise einen passiven Gleichrichter, der eine DC-Last des weiteren Verbrauchers mit Gleichstrom versorgt.

Aufgrund der Funktionsweise eines solchen Gleichrichters erzeugt dieser ebenfalls Rückkopplungseffekte, insbesondere in Form von Oberwellen in den am Netzanschlusspunkt abgegriffenen elektrischen Stroms.

Obgleich ein Oberwellengehalt des abgegriffenen Stroms einzelner Komponenten den normativen Vorgaben bzw. Grenzwerten entspricht, gilt dies nicht zwingend für eine Kombination aller Verbraucher, die an dem Netzanschlusspunkt angeschlossen sind.

Die Erfinder haben herausgefunden, dass für den beschriebenen Aufbau des Verdichtersystems die besagten Grenzwerte des resultierenden abgegriffenen Stroms durch ein gezieltes Steuern des Leistungskorrekturfaktors des Verdichters eingehalten werden können, ohne dabei am weiteren Verbraucher selbst Änderungen vornehmen zu müssen, beispielsweise in Form zusätzlicher dämpfender (und damit verlustbehafteter) Induktivitäten oder sogar eines separat bereitgestellten Leistungsfaktorkorrekturfilters am weiteren Verbraucher.

Dabei können durch den weiteren Verbraucher erzeugte Oberwellen in vorteilhafter Weise durch Berücksichtigung des Stromkennwerts am weiteren Verbraucher bei der Steuerung des Leistungsfaktorkorrekturfilters des Verdichters kompensiert werden.

Auf diese Weise kann das beschriebene Verdichtersystem normative Vorgaben beim Abgreifen des elektrischen Stroms von der Netzstromquelle einhalten, ohne dass der weitere Verbraucher konstruktiv verändert oder um zusätzliche Komponenten ergänzt werden muss.

Insoweit ermöglicht das Verfahren einen effizienten Betrieb eines Verdichtersystems, bei dem insbesondere Energieverluste gering gehalten werden. Ferner ist das beschriebene Vorgehen für eine Vielzahl verschiedener oder sogar mehrerer weiterer Verbraucher einsetzbar, wobei die Einhaltung der normativen Vorgaben lediglich durch Steuerung des Leitungskorrekturfilters des Verdichter gewährleistet werden kann.

Vorzugsweise handelt es sich um einen aktiven Leistungsfaktorkorrekturfilter, der gegenüber einer passiven Schaltung zwar aufwändiger ausgestaltet ist, aber gegenüber dieser bessere Leistungskorrekturfaktoren erzielt.

Vorzugsweise umfasst der Leistungsfaktorkorrekturfilter einen Gleichrichter sowie einem diesen in Bezug auf eine Energieflussrichtung von Netzstromquelle zum Elektromotor nachgeschalteten Aufwärtswandler. Ein Aufwärtswandler ist eine Form eines Gleichspannungswandlers, dessen Ausgangsspannung im Allgemeinen höher ist als dessen Eingangsspannung.

Der Gleichrichter kann passiv oder aktiv ausgeführt sein und ist vorzugsweise als passiver Brückengleichrichter ausgeführt

Vorzugsweise handelt es sich bei dem weiteren elektrischen Verbraucher um eine Kombination aus einem Gleichrichter, insbesondere einem passiven Gleichrichter, und einer DC-Last (DC, engl. direct current).

Der weitere Verbraucher umfasst insbesondere keinen eigenen Leistungsfaktorkorrekturfilter, oder zumindest einen Leistungsfaktorkorrekturfilter, dessen Leistungsfaktorkorrektur kleiner ausfällt, als die des Leistungsfaktorkorrekturfilters des Verdichters.

Die DC-Last kann dabei gerade im Falle eines Kältekreislaufsystems eine DC-Lüftereinheit bzw. ein DC-Elektromotor derselbigen sein.

Bei der Netzstromquelle kann es sich beispielsweise sowohl um eine 1-phasige oder um eine 3-phasigen Netzstromquelle handeln. In anderen Worten kann diese über den Netzanschlusspunkt beispielsweise 1-phasigen Wechselstrom oder 3-phasigen Wechselstrom (sog. Drehstrom) bereitstellen.

Das Verfahren ist dabei nicht auf eine spezifische Ausführung der Netzstromquelle beschränkt. Je nach Ausführung der Netzstromquelle unterscheidet sich der Aufbau von Verdichter und weiterem Verbraucher, deren Stromeingänge beispielhaft entweder auf 1- oder 3-phasigen Wechselstrom ausgelegt sind.

Wie auch im Falle der Netzstromquelle kann es sich bei dem Elektromotor des Verdichters um einen Elektromotor handeln, der mit 1- phasigem oder mehrphasigem Wechselstrom, insbesondere 3-phasigem Wechselstrom, betrieben wird. Entsprechend ist der Wechselrichter natürlich eingerichtet, 1-phasigen oder mehrphasigen Wechselstrom an seinem Ausgang bereitzustellen.

In einer bevorzugten Ausführungsform umfasst das Steuern des Leistungsfaktorkorrekturfilters ein Einstellen eines Betriebsparameters des Leistungsfaktorkorrekturfilter, der den vom Leistungsfaktorkorrekturfilter ausgegebenen Gleichstrom bestimmt, zumindest in Abhängigkeit des ermittelten zumindest einen oder der ermittelten mehreren Stromkennwerte des weiteren Verbrauchers.

In einer bevorzugten Ausführungsform umfasst der Leistungsfaktorkorrekturfilter mindestens eine Transistoreinheit, insbesondere einen MOSFET oder einen IGBT, und das Einstellen des Betriebsparameters des Leistungsfaktorkorrekturfilters zum Steuern des Leistungsfaktorkorrekturfilters wiederum ein Einstellen eines Steuersignals der mindestens einen Transistoreinheit zumindest in Abhängigkeit des ermittelten zumindest einen oder der ermittelten mehreren Stromkennwerte des weiteren Verbrauchers umfasst.

Dadurch wird eine einfach umzusetzende Möglichkeit zur Steuerung bereitgestellt, bei der das Steuersignal der Transistoreinheit eine Stellschraube ist.

In einer bevorzugten Ausführungsform ist der zumindest eine ermittelte Stromkennwert eine elektrische Stromstärke, insbesondere eine effektive elektrische Stromstärke, oder eine elektrische Leistung, insbesondere eine effektive elektrische Leistung. Vorzugsweise sind im Falle von mehreren Stromkennwerten, diese ebenso eine elektrische Stromstärke, insbesondere eine effektive elektrische Stromstärke, oder eine elektrische Leistung, insbesondere eine effektive elektrische Leistung insbesondere für unterschiedliche Frequenzen.

Durch die Verwendung von Effektivwerten kann die Steuerung besonders einfach gehalten werden, sodass Steuerzeiten reduziert werden können.

In einer bevorzugten Ausführungsform sind der weitere Verbraucher und der Verdichter zueinander in einer Parallelschaltung am Netzanschlusspunkt angeschlossen.

In einer bevorzugten Ausführungsform umfasst das Ermitteln des zumindest einen oder der mehreren Stromkennwerte des weiteren Verbrauchers ein Erfassen einer Stromgröße eines an einem Stromeingang des weiteren Verbrauchers anliegenden elektrischen Stroms, insbesondere einer Stromstärke, und ein Ermitteln des zumindest einen oder der mehreren Stromkennwerte auf Basis der erfassten Stromgröße.

Das Erfassen der Stromgröße kann dabei über geeignete Messmittel erfolgen, zum Beispiel im einfachsten Fall über Volt- und/oder Amperemeter. Beim Ermitteln des zumindest einen oder der mehreren Stromkennwerte auf Basis der erfassten Stromgröße kann es sich beispielsweise um ein Ermitteln eines oder mehrerer Effektivwerte handeln Die erfasste Stromgröße kann aber auch eins-zu-eins als der zumindest Stromkennwert ausgegeben werden.

In einer bevorzugten Ausführungsform umfasst das Ermitteln des zumindest einen oder der mehreren Stromkennwerte des weiteren Verbrauchers ein Bereitstellen eines Berechnungsmodells, das den elektrischen Aufbau des weiteren Verbrauchers, umfassend ein oder mehrere elektrische Kenngrößen des weiteren Verbrauchers, teilweise oder ganz beschreibt, ein Berechnen des zumindest einen oder der mehreren Stromkennwerte auf Basis des bereitgestellten Berechnungsmodells und ein Ausgeben des berechneten zumindest einen oder der berechneten mehreren Stromkennwerts als ermittelter Stromkennwert bzw. als ermittelte mehrere Stromkennwerte des weiteren Verbrauchers.

Dadurch wird eine Alternative zu einem Erfassen der Stromgröße über Messmittel bereitgestellt, sodass der Stromkennwert bzw. die Stromkennwerte des weiteren Verbrauchers im Grunde ohne Messung von Stromgrößen am weiteren Verbraucher bestimmt werden kann. Damit kann auf einen entsprechenden Messaufbau am weiteren Verbraucher verzichtet werden, wodurch Kosten und Bauraum eingespart werden.

Das Berechnungsmodell beschreibt dabei den elektrischen Aufbau des weiteren Verbrauchers und ist geeignet, elektrische Zustandsgrößen des weiteren Verbrauchers in Abhängigkeit eines am Verbraucher anliegenden Eingangsstroms, beispielsweise angegeben durch Stromstärke und/oder Spannung am Eingang, zu bestimmen.

Das Berechnungsmodell kann dabei insbesondere für den Fall, dass der weitere Verbraucher einer Kombination aus Gleichrichter und DC-Last entspricht, einfach gehalten werden und zeichnet sich zudem durch schnelle Berechnungszeiten und repräsentative Ergebnisse aus, sodass die Genauigkeit dieses Vorgehens einem direkten Erfassen der Stromgröße am weiteren Verbraucher in nichts nachsteht

Kenngrößen des weiteren Verbrauchers können beispielsweise und nicht beschränkend Widerstände, Kapazitäten oder Induktivitäten des weiteren Verbrauchers sein.

Vorzugsweise werden als Eingangsgröße für das Berechnungsmodell Nennbetriebswerte der DC-Last, beispielsweise eine Nennleistung oder eine Nennstromstärke, verwendet.

In einer bevorzugten Ausführungsform umfasst der Leistungsfaktorkorrekturfilter einen Gleichrichter mit einem Eingang für Wechselstrom und einem Ausgang für gleichgerichteten Ausgangsstrom.

Der Eingang des Gleichrichters ist mit dem Stromeingang des Leistungsfaktorkorrekturfilters verbunden. Dies kann direkt oder über weitere zwischengeordnete elektrische Bauteile erfolgen, wie beispielsweise Induktivitäten, Kapazitäten oder Widerstände.

Insbesondere handelt es sich bei dem Gleichrichter des Leistungsfaktorkorrekturfilters um einen Brückengleichrichter.

In einer bevorzugten Ausführungsform umfasst das Verfahren weiterhin ein Erfassen einer Stromgröße des Ausgangsstroms des Gleichrichters am Ausgang des Gleichrichters, insbesondere einer Stromstärke oder einer Spannung, wobei das Steuern des Leistungsfaktorkorrekturfilters des Verdichters in zusätzlicher Abhängigkeit von der erfassten Stromgröße des Ausgangsstroms des Gleichrichters erfolgt.

Dadurch wird die Steuerung des Leistungsfaktorkorrekturfilters um weitere Eingangsgrößen erweitert, wodurch eine genauere Steuerung ermöglicht wird.

Die Stromgröße kann dabei beispielweise als diskreter Wert, als zeitlicher Verlauf oder als Effektivwert erfasst werden.

In einer bevorzugten Ausführungsform umfasst der Leistungsfaktorkorrekturfilter einen Totem-Pole PFC Konverter.

Ein Totem-Pole PFC Konverter wird in der Regel durch eine Gegentaktendstufe aus Bipolar- oder Feldeffekttransistoren gebildet und ist für hohe Schaltgeschwindigkeit optimiert. Durch Einsatz eines solchen Totem-Pole PFC Konverters kann insbesondere auf zusätzliche passive Gleichrichter, wie beispielsweise Brückengleichrichter, als Teil des Leitungsfaktorkorrekturfilters verzichtet werden.

In einer hierzu bevorzugten Ausführung umfasst das Verfahren weiterhin ein Erfassen einer Stromgröße eines Eingangsstroms des Totem-Pole PFC Konverters, insbesondere einer Stromstärke oder einer Spannung, wobei das Steuern des Leistungsfaktorkorrekturfilters des Verdichters in zusätzlicher Abhängigkeit von der erfassten Stromgröße des Eingangsstroms des Totem-Pole PFC Konverters erfolgt.

In einer bevorzugten Ausführung umfasst das Verfahren weiterhin ein Erfassen einer Stromgröße eines Ausgangsstroms des Totem-Pole PFC Konverters, insbesondere einer Stromstärke oder einer Spannung, an einem mit dem Wechselrichter verbundenen Ausgang des Totem-Pole PFC Konverters, wobei das Steuern des Leistungsfaktorkorrekturfilters des Verdichters in zusätzlicher Abhängigkeit von der erfassten Stromgröße des Ausgangsstroms des Totem-Pole PFC Konverters erfolgt.

In einer bevorzugten Ausführungsform umfasst das Verfahren weiterhin ein Erfassen einer Stromgröße eines an dem Stromeingang des Leistungsfaktorkorrekturfilters anliegenden elektrischen Stroms, insbesondere einer Stromstärke oder einer Spannung, wobei das Steuern des Leistungsfaktorkorrekturfilters des Verdichters in zusätzlicher Abhängigkeit von der erfassten Stromgröße des am Stromeingang des Leistungsfaktorkorrekturfilters anliegenden elektrischen Stroms erfolgt.

Die Stromgröße kann dabei beispielweise als diskreter Wert, als zeitlicher Verlauf oder als Effektivwert erfasst werden.

Dadurch wird die Steuerung des Leistungsfaktorkorrekturfilters um weitere Eingangsgrößen erweitert, wodurch eine genauere Steuerung ermöglicht wird.

In einer bevorzugten Ausführungsform erfolgt das Steuern des Leistungsfaktorkorrekturfilters unter der Maßgabe, dass ein oder mehrere Kennwerte eines vom Verdichtersystem am Netzanschlusspunkt abgegriffenen elektrischen Stroms unterhalb eines jeweils vorgegebenen Grenzwerts liegen.

Dadurch können insbesondere Vorgaben zum Oberwellengehalt eingehalten werden.

Bei besagtem Kennwert kann es sich dabei beispielsweise um einen Oberwellengehalt bei bestimmten Frequenzen, aber auch um einen daraus gebildeten Mittelwert handeln.

In einer bevorzugten Ausführungsform handelt es sich bei den ein oder mehreren Kennwerten um Amplitudenwerte aus einem Frequenzspektrum des abgegriffenen elektrischen Stroms, insbesondere um Amplitudenwerte für Frequenzen, die einem ganzzahligen Vielfachen der Grundfrequenz der Netzstromquelle entspricht (auch Harmonische genannt).

Das Frequenzspektrum bietet eine einfache und schnelle Möglichkeit einen Oberwellengehalt des abgegriffenen elektrischen Stroms zu bestimmen.

Im Falle mehrerer Kennwerte entspricht jeder Kennwert dabei vorzugsweise einem Amplitudenwert einer anderen Frequenz.

Bei dem Frequenzspektrum handelt es sich insbesondere um ein Frequenzspektrum der Spannung des abgegriffenen elektrischen Stroms. Alternativ und nicht beschränkend kann es sich aber auch um ein Frequenzspektrum der Stromstärke handeln.

In einer bevorzugten Ausführungsform ist das Verdichtersystem als Teil eines Kältekreislaufsystems ausgeführt, bei dem es sich insbesondere um eine Wärmepumpe oder um eine Kältemaschine handelt, und das Verfahren ist ein Verfahren zum Steuern des Kältekreislaufsystems.

Gemäß einem zweiten Aspekt der Erfindung wird ein Verdichter zum Verdichten eines Arbeitsmediums bereitgestellt, der einen Elektromotor zum Bereitstellen einer mechanischen Bewegung zum Verdichten des Arbeitsmediums, einen Wechselrichter, der den Elektromotor mit ein- oder mehrphasigem Wechselstrom versorgt, einen Leistungsfaktorkorrekturfilter, der den Wechselrichter mit Gleichstrom versorgt und dessen Stromeingang zur Energieversorgung des Verdichters mit einem Netzanschlusspunkt einer Wechselstrom-bereitstellenden Netzstromquelle verbindbar ist, und eine Steuervorrichtung umfasst, die zumindest zum Steuern des Leistungsfaktorkorrekturfilters eingerichtet ist. Im Falle, dass der Verdichter und ein weiterer elektrischer Verbraucher an dem selben Netzanschlusspunkt einer Wechselstrom-bereitstellenden Netzstromquelle angeschlossen sind, ist die Steuervorrichtung eingerichtet, zumindest einen Stromkennwert oder mehrerer Stromkennwerte des weiteren Verbrauchers, die jeweils eine Stromaufnahme des weiteren Verbrauchers beschreiben, zu ermitteln und den Leistungsfaktorkorrekturfilter zumindest in Abhängigkeit des ermittelten zumindest einen oder der mehreren Stromkennwerte des weiteren Verbrauchers zu steuern.

Damit wird ein Verdichter bereitgestellt, der bei Anschluss an einen Netzanschlusspunkt zusammen mit einem weiteren elektrischen Verbraucher zur Umsetzung des vorstehend ausgeführten Verfahrens eingerichtet ist.

Die sich daraus ergebenden Vorteile entsprechen im Wesentlichen denen des Verfahrens und werden an dieser Stelle nicht nochmals wiederholt erläutert.

Vorzugsweise umfasst der weitere elektrische Verbraucher einen Gleichrichter, insbesondere einen passiven Gleichrichter, und eine DC-Last

Gemäß einem dritten Aspekt der Erfindung wird ein Verdichtersystem bereitgestellt, das insbesondere Teil eines Kältekreislaufsystems ist. Das Verdichtersystem umfasst einen elektrisch betriebenen Verdichter zum Verdichten eines Arbeitsmediums gemäß dem zweiten Aspekt oder einer von dessen bevorzugten Ausführungen sowie einen weiteren elektrischen Verbraucher. Der Verdichter und der weitere Verbraucher sind vorgesehen, an einem selben Netzanschlusspunkt einer Wechselstrom-bereitstellenden Netzstromquelle angeschlossen zu werden, wobei für diesen Fall die Steuervorrichtung des Verdichters eingerichtet ist, zumindest einen Stromkennwert oder mehrere Stromkennwerte des weiteren Verbrauchers, der eine Stromaufnahme des weiteren Verbrauchers beschreibt, zu ermitteln und den Leistungsfaktorkorrekturfilter zumindest in Abhängigkeit des ermittelten zumindest einen oder der mehren Stromkennwerte des weiteren Verbrauchers zu steuern.

Damit wird ein Verdichtersystem bereitgestellt, welches zur Umsetzung des vorstehend ausgeführten Verfahrens eingerichtet ist.

Die sich daraus ergebenden Vorteile entsprechen im Wesentlichen denen des Verfahrens und werden an dieser Stelle nicht nochmals wiederholt erläutert. Gleiches gilt für die nachfolgend beschriebenen spezifischen Ausführungen, die weitestgehend der vorrichtungsgemäßen Realisierung der spezifischen und bereits beschriebenen Ausführungen des Verfahrens entsprechen.

Vorzugsweise sind der Verdichter und der weitere Verbraucher in Form einer Parallelschaltung am Netzanschlusspunkt angeschlossen.

Bei der Netzstromquelle kann es sich beispielsweise sowohl um eine 1-phasige oder um eine 3-phasige Netzstromquelle handeln. In anderen Worten kann diese über den Netzanschlusspunkt beispielsweise 1-phasigen Wechselstrom oder 3-phasigen Wechselstrom (sog. Drehstrom) bereitstellen.

Das Verdichtersystem ist dabei nicht auf eine spezifische Ausführung der Netzstromquelle beschränkt. Je nach Ausführung der Netzstromquelle unterscheidet sich der Aufbau von Verdichter und weiterem Verbraucher, deren Stromeingänge beispielhaft entweder auf 1- oder 3-phasigen Wechselstrom ausgelegt sind.

Vorzugsweise ist die Steuervorrichtung im Zuge des Steuerns des Leistungsfaktorkorrekturfilters eingerichtet, einen Betriebsparameter des Leistungsfaktorkorrekturfilters, der den vom Leistungsfaktorkorrekturfilter ausgegebenen Gleichstrom bestimmt und/oder der den von der Netzstromquelle durch den Verdichter abgegriffenen Wechselstrom beeinflusst, zumindest in Abhängigkeit des ermittelten zumindest einen oder der mehren Stromkennwerte des weiteren Verbrauchers einzustellen.

Vorzugsweise umfasst der Leistungsfaktorkorrekturfilter mindestens eine Transistoreinheit, insbesondere einen MOSFET oder einen IGBT, und die Steuervorrichtung ist im Zuge des Einstellens des Betriebsparameters des Leistungsfaktorkorrekturfilters eingerichtet, ein Steuersignal der mindestens einen Transistoreinheit zumindest in Abhängigkeit des ermittelten zumindest einen oder der mehreren Stromkennwerte des weiteren Verbrauchers einzustellen. Vorzugsweise umfasst die Steuervorrichtung hierzu eine PWM Berechnungseinheit (PWM: Pulsweitenmodulation), die das Steuersignal als PWM-Signal bereitstellt.

Vorzugsweise umfasst das Verdichtersystem ein Strommessmittel zum Erfassen einer Stromgröße eines an einem Stromeingang des weiteren Verbrauchers anliegenden elektrischen Stroms, insbesondere einer Stromstärke. Das Strommessmittel ist mit der Steuervorrichtung gekoppelt und die Steuervorrichtung ist eingerichtet, auf Basis der erfassten Stromgröße den zumindest einen oder die mehreren Stromkennwerte des weiteren Verbrauchers zu ermitteln.

Vorzugsweise kann die Steuervorrichtung aber auch auf andere Weise den Stromkennwert bzw. die mehreren Stromkennwerte des weiteren Verbrauchers ermitteln. Hierzu umfasst die Steuervorrichtung vorzugsweise eine Berechnungsmodelleinheit, die ein Berechnungsmodell bereitstellt, das den elektrischen Aufbau des weiteren Verbrauchers, umfassend ein oder mehrere elektrische Kenngrößen des weiteren Verbrauchers, beschreibt. Die Berechnungsmodelleinheit ist ferner eingerichtet, auf Basis des bereitgestellten Berechnungsmodells den zumindest einen Stromkennwert oder die mehren Stromkennwerte des weiteren Verbrauchers zu ermitteln und diesen zur weiteren Verwendung durch die Steuervorrichtung auszugeben.

Als Eingangsgröße für das Berechnungsmodell werden vorzugsweise Nennbetriebswerte des weiteren Verbrauchers, beispielsweise eine Nennleistung oder eine Nennstromstärke, verwendet. Alternativ oder zusätzlich können auch am weiteren Verbraucher erfasste Betriebswerte für das Berechnungsmodell verwendet werden.

Vorzugsweise umfasst der Leistungsfaktorkorrekturfilter einen Gleichrichter mit einem Eingang für Wechselstrom und einem Ausgang für gleichgerichteten Ausgangsstrom, insbesondere handelt es sich um einen Brückengleichrichter, wobei der Eingang des Gleichrichters der Stromeingang des Leistungsfaktorkorrekturfilters ist, der mit dem Netzanschlusspunkt verbindbar ist

Im Falle einer solchen Ausführung mit Gleichrichter umfasst das Verdichtersystem vorzugsweise ein erstes Strommessmittel, das zum Erfassen einer Stromgröße des Ausgangsstroms des Gleichrichters , insbesondere einer Stromstärke oder einer Spannung, eingerichtet ist, wobei die Steuervorrichtung eingerichtet ist, den Leistungsfaktorkorrekturfilter des Verdichters in zusätzlicher Abhängigkeit von der durch das Strommessmittel erfassten Stromgröße des Ausgangsstroms des Gleichrichters zu steuern.

Weiter vorzugsweise umfasst das Verdichtersystem ein Strommessmittel am Netzanschlusspunkt, das zum Erfassen einer Stromgröße eines an dem Stromeingang des Leistungsfaktorkorrekturfilters anliegenden elektrischen Stroms, insbesondere einer Stromstärke oder einer Spannung, eingerichtet ist, wobei die Steuervorrichtung eingerichtet ist, den Leistungsfaktorkorrekturfilter des Verdichters in zusätzlicher Abhängigkeit von der durch das weitere Strommessmittel erfassten Stromgröße des am Stromeingang des Leistungsfaktorkorrekturfilters anliegenden elektrischen Stroms zu steuern.

Gemäß einem vierten Aspekt wird ein Kältekreislaufsystem bereitgestellt, das zur Durchführung eines Kältekreisprozesses auf Basis eines Arbeitsmediums eingerichtet ist. Insbesondere handelt es sich bei dem Kältekreislaufsystem um eine Wärmepumpe oder um eine Kältemaschine. Das Kältekreislaufsystem umfasst ein Verdichtersystem, das gemäß dem dritten Aspekt oder einer von dessen bevorzugten Ausführungen ausgeführt ist. Der Verdichter ist eingerichtet, das Arbeitsmedium des Kältekreislaufsystems zu verdichten.

Das Kältekreislaufsystem ist zur Durchführung eines Kältekreisprozesses eingerichtet, im Zuge dessen das Arbeitsmedium des Kältekreislaufsystems gemäß der allgemein bekannten thermodynamischen Prinzipien verdichtet und entspannt sowie erwärmt und abgekühlt wird, derart, dass an zumindest einer Stelle des Kältekreislaufsystems Wärmeenergie auf das Arbeitsmedium übertragen werden kann und an zumindest einer weiteren Stelle dem Arbeitsmedium Wärmeenergie entzogen werden kann.

Vorzugsweise umfasst das Kältekreislaufsystem für den Kältekreisprozess eine Expansionsvorrichtung zum Entspannen des Arbeitsmediums, einen Verdampfer zum Verdampfen des Arbeitsmediums und einen Verflüssiger zum Verflüssigen des Arbeitsmediums.

Das Arbeitsmedium durchläuft dabei in einem sich wiederholenden Zyklus nacheinander den Verdichter, den Verflüssiger, die Expansionsvorrichtung und den Verdampfer, wobei dem Arbeitsmedium am Verdampfer Wärmeenergie zugeführt werden kann und am Verflüssiger Wärmeenergie entzogen werden kann. Verflüssiger und Verdampfer sind vorzugsweise als Wärmeübertrager, beispielsweise als Lamellenwärmeübertrager, ausgeführt.

Der weitere elektrische Verbraucher umfasst vorzugsweise einen Gleichrichter, insbesondere einen passiven Gleichrichter, vorzugsweise einen Brückengleichrichter, und eine DC-Last, insbesondere eine DC-Lüftereinheit und/oder eine DC-Umwälzpumpe. Die DC-Lüftereinheit und/oder die DC-Umwälzpumpe wird mit Gleichstrom betrieben und wird über den Gleichrichter mit elektrischer Energie von der Netzstromquelle versorgt.

Unter dem Arbeitsmedium ist jedwedes Fluid zu verstehen, dass sich zum Einsatz in einem Kältekreislaufsystem eignet und dazu in den genannten Vorrichtungen verdichtet, verflüssigt, expandiert und verdampft werden kann, wobei es sich bei dem Arbeitsmedium üblicherweise und nicht darauf beschränkend um Kältemittel handelt, wie beispielsweise Propan oder das Kältemittel R32, einem Fluorkohlenwasserstoff.

Bei der DC-Lüftereinheit handelt es sich insbesondere um eine Lüftereinheit eines Wärmeübertragers des Kältekreislaufsystems, der vorzugsweise Teil einer Außeneinheit des Kältekreislaufsystems ist. Besagter Wärmeübertrager kann dabei insbesondere als Verdampfer und/oder als Verflüssiger für das Arbeitsmediums des Kältekreislaufsystems fungieren.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.
Fig. 1 zeigt schematisch ein Ablaufdiagramm eines ersten Ausführungsbeispiels des erfindungsgemäßen Verfahrens.
Fig. 2 zeigt schematisch den Aufbau eines ersten Ausführungsbeispiels des erfindungsgemäßen Verdichtersystems.
Fig. 3 zeigt schematisch den Aufbau eines zweiten Ausführungsbeispiels des erfindungsgemäßen Verdichtersystems.
Fig. 4 zeigt schematisch den Aufbau eines dritten Ausführungsbeispiels des erfindungsgemäßen Verdichtersystems.
Fig. 5 zeigt schematisch den Aufbau einer Steuervorrichtung eines vierten Ausführungsbeispiels des erfindungsgemäßen Verdichtersystems.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

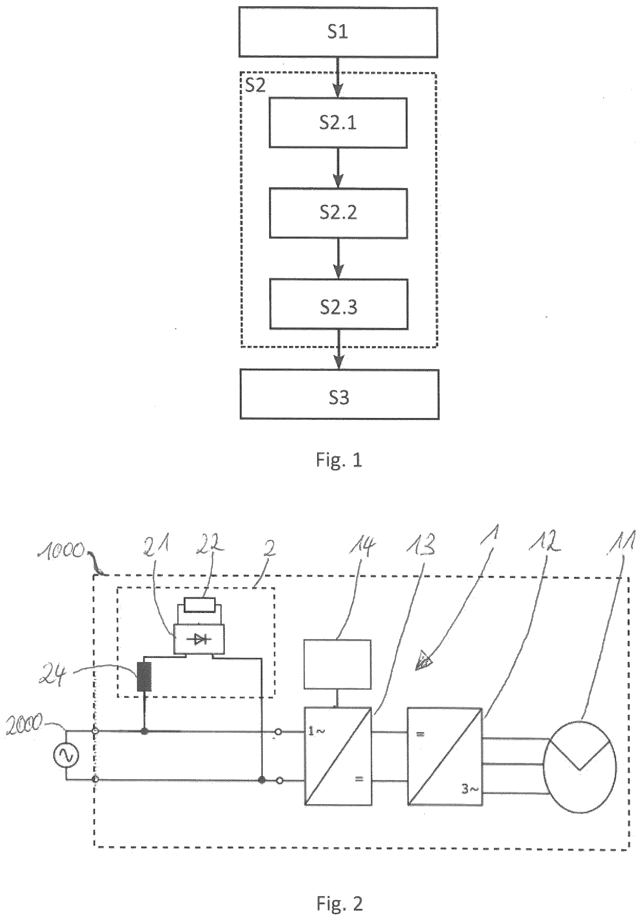

Fig. 1 zeigt schematisch ein Ablaufdiagramm eines ersten Ausführungsbeispiels des erfindungsgemäßen Verfahrens.

Das Verfahren wird an einem Verdichtersystem durchgeführt, das einen elektrisch betriebenen Verdichter, der zum Verdichten eines Arbeitsmediums eingerichtet ist, und einen weiteren elektrischen Verbraucher umfasst. Der Verdichter umfasst wiederum einen Elektromotor zum Bereitstellen einer mechanischen Bewegung zum Verdichten des Arbeitsmediums, einen Wechselrichter, der den Elektromotor mit ein- oder mehrphasigem Wechselstrom versorgt, einen Leistungsfaktorkorrekturfilter, der den Wechselrichter mit Gleichstrom versorgt und dessen Stromeingang zur Energieversorgung des Verdichters mit einem Netzanschlusspunkt einer Wechselstrom-bereitstellenden Netzstromquelle verbunden ist Der weitere elektrische Verbraucher ist zur Energieversorgung an dem selben Netzanschlusspunkt angeschlossen wie der Leistungsfaktorkorrekturfilter.

In Schritt S1 erfolgt ein Betreiben des Verdichtersystems mit elektrischem Strom aus der Netzstromquelle.

In Schritt S2 erfolgt ein Ermitteln zumindest eines Stromkennwerts des weiteren Verbrauchers, der eine Stromaufnahme des weiteren Verbrauchers beschreibt; und

Schritt S2 umfasst hierzu vorzugsweise die Teilschritte S2.1 bis S2.3.

In Schritt S2.1 erfolgt ein Bereitstellen eines Berechnungsmodells, das den elektrischen Aufbau des weiteren Verbrauchers, umfassend ein oder mehrere elektrische Kenngrößen des weiteren Verbrauchers, beschreibt.

In Schritt S2.2 erfolgt ein Berechnen des zumindest einen Stromkennwerts auf Basis des in Schritt S2.1 bereitgestellten Berechnungsmodells.

In Schritt S2.3 erfolgt ein Ausgeben des in Schritt S2.2 berechneten zumindest einen Stromkennwerts als ermittelter Stromkennwert des weiteren Verbrauchers.

In Schritt S3 erfolgt ein Steuern des Leistungsfaktorkorrekturfilters des Verdichters zumindest in Abhängigkeit des in Schritt S2 ermittelten zumindest einen Stromkennwerts des weiteren Verbrauchers.

Das Verfahren ermöglicht es, durch den weiteren Verbraucher erzeugte Oberwellen in vorteilhafter Weise durch Berücksichtigung des zumindest einen Stromkennwerts am weiteren Verbraucher bei der Steuerung des Leistungsfaktorkorrekturfilters des Verdichters zu kompensieren.

Auf diese Weise kann das beschriebene Verdichtersystem normative Vorgaben beim Abgreifen des elektrischen Stroms von der Netzstromquelle einhalten, ohne dass der weitere Verbraucher konstruktiv verändert oder um zusätzliche Komponenten, wie beispielsweise dissipative Elemente, ergänzt werden muss.

Insoweit ermöglicht das Verfahren einen effizienten Betrieb eines Verdichtersystems, bei dem insbesondere Energieverluste gering gehalten werden.

Fig. 2 zeigt schematisch den Aufbau eines ersten Ausführungsbeispiels des erfindungsgemäßen Verdichtersystems 1000.

Das Verdichtersystem umfasst einen Verdichter 1 und einen weiteren elektrischen Verbraucher 2, die am selben Netzanschlusspunkt 2000 einer Wechselstrom-bereitstellenden Netzstromquelle angeschlossen sind, insbesondere in Form einer Parallelschaltung.

Der weitere Verbraucher 2 umfasst vorzugsweise einen Gleichrichter 21, insbesondere einen passiven Gleichrichter, sowie eine von diesem mit Gleichstrom versorgte DC-Last 22. Wahlweise und nicht zwingend kann der weitere Verbraucher 2 noch eine dem Gleichrichter 21 vorgeschaltete Induktivität 24 umfassen.

Der Verdichter 1 ist ein elektrisch betriebener Verdichter 1 zum Verdichten eines Arbeitsmediums, der einen Elektromotor 11 zum Bereitstellen einer mechanischen Bewegung zum Verdichten des Arbeitsmediums, einen Wechselrichter 12, einen Leistungsfaktorkorrekturfilter 13 und eine Steuervorrichtung 14 umfasst

Der Wechselrichter 12 versorgt den Elektromotor 11 mit ein- oder mehrphasigem Wechselstrom, hier mit 3-phasigem Wechselstrom.

Der Leistungsfaktorkorrekturfilter 13 versorgt wiederum den Wechselrichter 12 mit Gleichstrom, wobei ein Stromeingang des Leistungsfaktorkorrekturfilters 13 zur Energieversorgung des Verdichters 1 mit dem Netzanschlusspunkt 2000 verbindbar ist bzw. im gezeigten Ausführungsbeispiel verbunden ist.

Die Steuervorrichtung 14 ist zumindest zum Steuern des Leistungsfaktorkorrekturfilters 13 eingerichtet.

Die Steuervorrichtung 14 ist eingerichtet, zumindest einen Stromkennwert des weiteren Verbrauchers 2, der eine Stromaufnahme des weiteren Verbrauchers 2 beschreibt, zu ermitteln und den Leistungsfaktorkorrekturfilter 13 zumindest in Abhängigkeit des ermittelten zumindest einen Stromkennwerts zu steuern.

Das dargestellte Verdichtersystem 1000 ermöglicht es, dass durch den weiteren Verbraucher 2 erzeugte Oberwellen in vorteilhafter Weise durch Berücksichtigung des zumindest einen Stromkennwerts am weiteren Verbraucher 2 bei der Steuerung des Leistungsfaktorkorrekturfilters 13 des Verdichters 1 durch die Steuervorrichtung 14 kompensiert werden können.

Auf diese Weise kann das Verdichtersystem 1000 normative Vorgaben beim Abgreifen des elektrischen Stroms von der Netzstromquelle einhalten, ohne dass der weitere Verbraucher 2 konstruktiv verändert oder um zusätzliche Komponenten, wie beispielsweise dissipative Elemente, ergänzt werden muss.

Insoweit wird ein effizient betreibbares Verdichtersystem 1000 bereitgestellt, bei dem insbesondere Energieverluste gering gehalten werden.

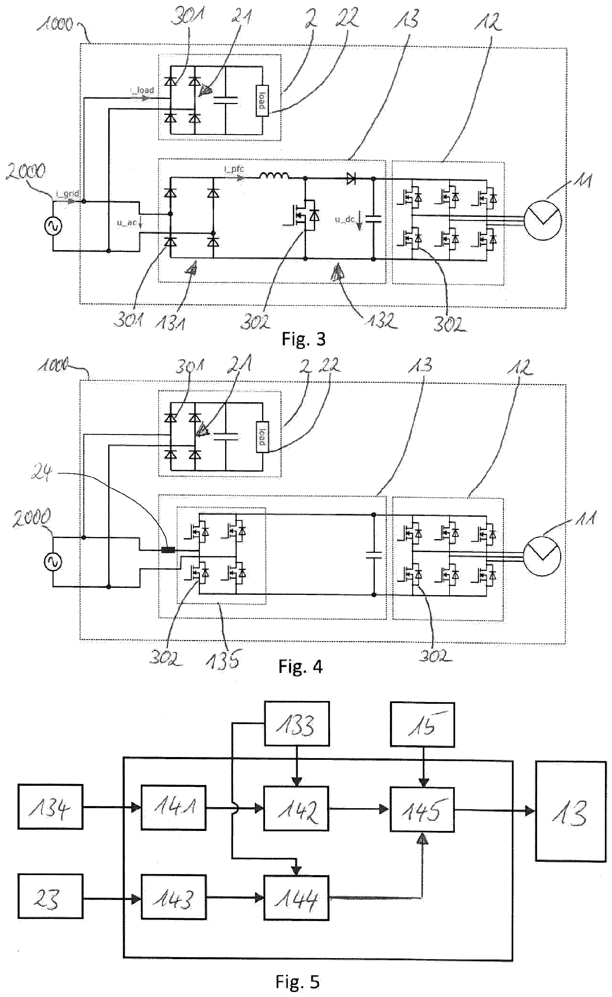

Fig. 3 zeigt schematisch den Aufbau eines zweiten Ausführungsbeispiels des erfindungsgemäßen Verdichtersystems.

Das Verdichtersystem 1000 umfasst einen Verdichter 1 und einen weiteren elektrischen Verbraucher 2, die am selben Netzanschlusspunkt 2000 einer Wechselstrom-bereitstellenden Netzstromquelle angeschlossen sind, insbesondere in Form einer Parallelschaltung.

Der weitere Verbraucher 2 umfasst vorzugsweise einen Gleichrichter 21, insbesondere einen passiven Gleichrichter, der im gezeigten Ausführungsbeispiel als ein auf Dioden 301 basierender Brückengleichrichter ausgeführt ist, sowie eine von diesem mit Gleichstrom versorgte DC-Last 22.

Der Verdichter 1 ist ein elektrisch betriebener Verdichter 1 zum Verdichten eines Arbeitsmediums, der einen Elektromotor 11 zum Bereitstellen einer mechanischen Bewegung zum Verdichten des Arbeitsmediums, einen Wechselrichter 12, einen Leistungsfaktorkorrekturfilter 13 und eine hier nicht dargestellte Steuervorrichtung umfasst.

Der Wechselrichter 12 versorgt den Elektromotor 11 mit ein- oder mehrphasigem Wechselstrom, hier mit 3-phasigem Wechselstrom.

Der Wechselrichter 12 ist vorzugsweise aus mehreren Transistoreinheiten aufgebaut, besonders bevorzugt aus mehreren MOSFETs 302 oder IGBTs.

Der Leistungsfaktorkorrekturfilter 13 versorgt wiederum den Wechselrichter 12 mit Gleichstrom, wobei ein Stromeingang des Leistungsfaktorkorrekturfilters 13 zur Energieversorgung des Verdichters 1 mit dem Netzanschlusspunkt 2000 verbindbar ist bzw. im gezeigten Ausführungsbeispiel verbunden ist.

Der Leistungsfaktorkorrekturfilter 13 umfasst vorzugsweise einen Gleichrichter 131, insbesondere einen passiven Gleichrichter, der im gezeigten Ausführungsbeispiel als ein auf Dioden 301 basierender Brückengleichrichter ausgeführt ist

Weiter umfasst der Leistungsfaktorkorrekturfilter 13 einen dem Gleichrichter 131 nachgeschalteten Aufwärtswandler 132, der als aktiver Leistungsfaktorkorrekturfilter über mindestens eine Transistoreinheit verfügt, die als MOSFET 302 oder als IGBT ausgeführt sein kann.

In Fig. 3 ist die am Stromeingang des Leistungsfaktorkorrekturfilters 13 anliegende Spannung über "u_ac" angegeben, die Stromstärke in der Schnittstelle zwischen Gleichrichter 131 und Aufwärtswandler 132 ist durch "i_pfc" angegeben, die Spannung in der Schnittstelle zwischen Leistungsfaktorkorrekturfilter 13 und Wechselrichter 12 ist durch "u_dc" angegeben, die Stromstärke am Eingang des weiteren Verbrauchers 2 ist durch "i_load" angegeben und die Stromstärke am Netzanschlusspunkt 2000 ist durch "i_grid" angeben.

Besagte Bezeichnungen werden später in Bezug auf das Ausführungsbeispiel in Fig. 5 aufgegriffen.

Die Steuervorrichtung ist zumindest zum Steuern des Leistungsfaktorkorrekturfilters 13 eingerichtet.

Die Steuervorrichtung ist eingerichtet, zumindest einen Stromkennwert des weiteren Verbrauchers 2, der eine Stromaufnahme des weiteren Verbrauchers 2 beschreibt, zu ermitteln und den Leistungsfaktorkorrekturfilter 13 zumindest in Abhängigkeit des ermittelten zumindest einen Stromkennwerts zu steuern.

Das dargestellte Verdichtersystem 1000 ermöglicht es, dass durch den weiteren Verbraucher 2 erzeugte Oberwellen in vorteilhafter Weise durch Berücksichtigung des zumindest einen Stromkennwerts am weiteren Verbraucher 2 bei der Steuerung des Leistungsfaktorkorrekturfilters 13 des Verdichters 1 durch die Steuervorrichtung 14 kompensiert werden können.

Auf diese Weise kann das Verdichtersystem 1000 normative Vorgaben beim Abgreifen des elektrischen Stroms von der Netzstromquelle einhalten, ohne dass der weitere Verbraucher 2 konstruktiv verändert oder um zusätzliche Komponenten, wie beispielsweise dissipative Elemente, ergänzt werden muss.

Insoweit wird ein effizient betreibbares Verdichtersystem 1000 bereitgestellt, bei dem insbesondere Energieverluste gering gehalten werden.

Fig. 4 zeigt schematisch den Aufbau eines dritten Ausführungsbeispiels des erfindungsgemäßen Verdichtersystems 1000.

Das Verdichtersystem 1000 gemäß dem dritten Ausführungsbeispiel unterscheidet sich dabei vom zweiten Ausführungsbeispiel lediglich in der Ausgestaltung des Leistungsfaktorkorrekturfilters 13, der vorliegend eine Totem-Pole Topologie aufweist.

Hierzu umfasst der Leistungsfaktorkorrekturfilter 13 vorzugsweise eine Totem-Pole PFC Konverter 135, dessen Stromeingang mit dem Netzanschlusspunkt 2000 verbunden ist und dessen Ausgang mit dem Wechselrichter 12 verbunden ist, hier beispielswiese über einen zwischenliegende Kapazität (siehe Fig. 4).

Der Totem-Pole PFC Konverter 135 kann über mehrere MOSFETs 302 oder IGBT ausgebildet sein, die beispielsweise und nicht beschränkend entsprechend des elektrischen Schaltplans in Fig. 4 angeordnet sein können.

Dem Totem-Pole PFC Konverter 135 kann in Bezug auf eine Energieflussrichtung von Netzanschlusspunkt 2000 zu Elektromotor 11 vorzugsweise eine Induktivität 24 vorgeschaltet sein.

Der übrige Aufbau entspricht im Wesentlichen dem aus Fig. 3 und wird an dieser Stelle nicht erneut erläutert.

Fig. 5 zeigt schematisch den Aufbau einer Steuervorrichtung 14 eines vierten Ausführungsbeispiels des erfindungsgemäßen Verdichtersystems.

Das Verdichtersystem umfasst einen Verdichter zum Verdichten eines Arbeitsmediums, der einen Elektromotor zum Bereitstellen einer mechanischen Bewegung zum Verdichten des Arbeitsmediums, einen Wechselrichter, der den Elektromotor mit ein- oder mehrphasigem Wechselstrom versorgt, einen Leistungsfaktorkorrekturfilter 13, der den Wechselrichter mit Gleichstrom versorgt und dessen Stromeingang zur Energieversorgung des Verdichters mit einem Netzanschlusspunkt einer Wechselstrom-bereitstellenden Netzstromquelle verbindbar ist, und eine Steuervorrichtung 14 umfasst, die zumindest zum Steuern des Leistungsfaktorkorrekturfilters 13 eingerichtet ist

Neben dem Verdichter umfasst das Verdichtersystem zumindest einen weiteren elektrischen Verbraucher. Der Verdichter und der weitere Verbraucher sind vorgesehen, an einem selben Netzanschlusspunkt einer Wechselstrom-bereitstellenden Netzstromquelle angeschlossen zu werden, wobei für diesen Fall die Steuervorrichtung 14 des Verdichters eingerichtet ist, zumindest einen Stromkennwert des weiteren Verbrauchers, der eine Stromaufnahme des weiteren Verbrauchers beschreibt, zu ermitteln und den Leistungsfaktorkorrekturfilter 13 zumindest in Abhängigkeit des ermittelten zumindest einen Stromkennwerts des weiteren Verbrauchers zu steuern.

Der Leistungsfaktorkorrekturfilter dieses Ausführungsbeispiels umfasst vorzugsweise einen Gleichrichter, insbesondere einen passiven Gleichrichter sowie einen darauf folgenden Aufwärtswandler, der mindestens eine Transistoreinheit umfasst

Der weitere Verbraucher und der Verdichter sind parallel am Netzanschlusspunkt angeschlossen.

Bis auf den Leistungsfaktorkorrekturfilter 13 und die Steuervorrichtung 14 sind die vorstehend anderweitig erwähnten Komponenten des Verdichters nicht in Fig. 5 dargestellt

Nachfolgend erfolgt eine Erläuterung des Aufbaus der Steuervorrichtung 14 zur Veranschaulichung der darin erfolgenden Abläufe zur Steuerung des Leistungsfaktorkorrekturfilters 13.

Die Steuervorrichtung 14 gemäß Fig. 5 kann beispielsweise in dem Verdichtersystem aus Fig. 2 oder aus Fig. 3 zum Einsatz kommen, ist aber nicht auf den Einsatz in diesen beschränkt

Zur Erläuterung der Abläufe wird teilweise auf die Stromgrößen "u_dc", "u_ac", "i_pfc" etc. aus Fig. 3 verwiesen, was allerdings nicht bedeutet, dass die in Fig. 5 gezeigte Steuervorrichtung 14 auf den Einsatz in einem Verdichtersystem gemäß Fig. 3 beschränkt sein soll. Der Bezug zu Fig. 3 wird lediglich zur besseren Erläuterung der Abläufe in der Steuervorrichtung hergestellt

Die Steuervorrichtung 14 umfasst vorzugsweise einen Spannungsregler 141, einen Stromstärkenregler 142, eine Berechnungsmodelleinheit 143, eine Kompensationseinheit 144 und eine PWM Berechnungseinheit 145.

Weiterhin umfasst das Verdichtersystem ein Strommessmittel 15, vorzugsweise ein Spannungsmessmittel, am Netzanschlusspunkt, ein erstes Strommessmittel 133 des Leistungsfaktorkorrekturfilters 13, ein zweites Strommessmittel 134 des Leistungsfaktorkorrekturfilters 13 sowie eine Betriebsdatenbereitstellungseinheit 23.

Das erste Strommessmittel 133 ist an einem Ausgang des Gleichrichters des Leistungsfaktorkorrekturfilters angeordnet und insbesondere eingerichtet, eine dortige Stromstärke des Ausgangsstroms des Gleichrichters zu messen. Im Falle des Ausführungsbeispiels aus Fig. 3 würde diese Stromstärke der dortigen Stromstärke i_pfc entsprechen.

Das zweite Strommessmittel 134 ist an einer Schnittstelle zwischen Leistungsfaktorkorrekturfilter und Wechselrichter angeordnet, und insbesondere eingerichtet, eine dortige Spannung zu messen. Im Falle des Ausführungsbeispiels aus Fig. 3 würde diese Spannung der dortigen Spannung u_dc entsprechen.

Das Strommessmittel 15 am Netzanschlusspunkt ist insbesondere eingerichtet, eine dortige Spannung zu messen. Im Falle des Ausführungsbeispiels aus Fig. 3 würde diese Spannung der dortigen Spannung u_ac entsprechen.

Die Betriebsdatenbereitstellungseinheit 23 enthält Betriebsdaten des weiteren Verbrauchers, insbesondere Daten zu dessen Nennbetrieb, wie beispielsweise eine Nennleistung oder eine Nennstromstärke. Im beispielhaften Fall, dass der weitere Verbraucher eine DC-Lüftungseinheit oder eine DC-Umwälzpumpe ist, können die Betriebsdaten Daten zu einer Drehzahl der Lüftungseinheit oder eine DC-Umwälzpumpe sein, die entweder eine absolute Drehzahl oder eine Verhältnis der Drehzahl zur einem Nenndrehzahlwert beschreiben.

Obgleich die Komponenten 133, 134 in Fig. 5 nicht innerhalb des mit 13 bezeichneten Rechtecks eingezeichnet sind, sind diese im gezeigten Ausführungsbeispiel dennoch Komponenten des Leistungsfaktorkorrekturfilters 13. Das zweite Strommessmittel 134 kann alternativ auch als Komponente des Wechselrichters ausgeführt sein.

Der Spannungsregler 141 ist mit dem zweiten Strommessmittel 134 gekoppelt und erhält dessen Spannungsmesswert als Eingangsgröße. Basierend auf dem erhaltenen Spannungsmesswert und einem entsprechend vorgegebenen Spannungssollwert ist der Spannungsregler 141 eingerichtet, einen Sollwert für die Stromstärke des Ausgangsstroms des Gleichrichters des Leistungsfaktorkorrekturfilters zu bestimmen.

Der Stromstärkenregler 142 ist mit dem Spannungsregler 141 gekoppelt und erhält den durch diesen bestimmen Sollwert für die Stromstärke als Eingangsgröße. Weiter ist der Stromstärkenregler 142 mit dem ersten Messmittel 133 gekoppelt und erhält dessen Stromstärkenmesswert als weitere Eingangsgröße. Basierend auf dem erhaltenen Stromstärkenmesswert (als Istwert) und dem erhaltenen Sollwert für die Stromstärke vom Spannungsregler 141 ist der Stromstärkenregler 142 eingerichtet, ein erstes Steuersignal für den Leistungsfaktorkorrekturfilter zu bestimmen, sodass die Spannung in der Schnittstelle zwischen Leistungskorrekturfaktor und Wechselrichter möglichst dem vorgegebenen Spannungssollwert folgt

Die Berechnungsmodelleinheit 143 ist mit der Betriebsdatenbereitstellungseinheit 23 gekoppelt und erhält von dieser Betriebsdaten des weiteren Verbrauchers als Eingangsgröße. Die Berechnungsmodelleinheit 143 stellt ein Berechnungsmodell bereit, das den elektrischen Aufbau des weiteren Verbrauchers, umfassend ein oder mehrere elektrische Kenngrößen des weiteren Verbrauchers, beschreibt. Die Berechnungsmodelleinheit 143 ist eingerichtet, auf Basis des bereitgestellten Berechnungsmodell und der Eingangsgröße von der Betriebsdatenbereitstellungseinheit 23 den zumindest einen Stromkennwert des weiteren Verbrauchers zu ermitteln, insbesondere in Form einer Stromstärke, vorzugsweise in Form von Amplituden und Phasenlagen einzelner Oberwellen des Stroms, und diesen an die Kompensationseinheit 144 zu übermitteln. Die ermittelte Stromstärke würde im Falle des Ausführungsbeispiels aus Fig. 3 der dortigen Stromstärke i_load entsprechen bzw. wäre eine Abschätzung dieser.

Die Kompensationseinheit 144 ist mir der Berechnungsmodelleinheit 143 gekoppelt und erhält den durch diesen ermittelten zumindest einen Stromkennwert, in diesem Fall die Stromstärke, als Eingangsgröße. Weiter ist die Kompensationseinheit 142 mit dem ersten Messmittel 133 gekoppelt und erhält dessen Stromstärkenmesswert als weitere Eingangsgröße. Basierend auf dem erhaltenen Stromstärkenmesswert und dem ermittelten zumindest einen Stromkennwert ist die Kompensationseinheit 144 eingerichtet, eine Stromstärke am Netzanschlusspunkt zu ermitteln. Die ermittelte Stromstärke würde im Falle des Ausführungsbeispiels aus Fig. 3 der dortigen Stromstärke i_grid entsprechen bzw. wäre eine Abschätzung dieser.

Vorzugsweise werden die jeweiligen, vorstehend beschriebenen Größen als zeitliche Verläufe erfasst bzw. die daraus ermittelten Größen als zeitliche Verläufe ermittelt.

Basierend auf der ermittelten Stromstärke am Netzanschlusspunkt ist die Kompensationseinheit 144 wiederum eingerichtet, ein Kompensationssignal zu ermitteln und dieses an die PWM-Berechnungseinheit 145 zu übermitteln.

Das Kompensationssignal wird dabei unter der Maßgabe ermittelt, den Oberwellengehalt des Stroms am Netzanschlusspunkt zu reduzieren.

Die PWM-Berechnungseinheit 145 erhält nun das erste Steuersignal vom Stromstärkenregler 142, das Kompensationssignal von der Kompensationseinheit 144 sowie den Spannungsmesswert des Strommessmittels 15 am Netzanschlusspunkt und ermittelt auf Basis derer ein PWM-Steuersignal für die Transistoreinheit des Leistungsfaktorkorrekturfilters 13, das von der PWM-Berechnungseinheit an die Transistoreinheit übertragen wird.

Der auf diese Weise angesteuerte Transistor ermöglicht es, durch den weiteren Verbraucher erzeugte Oberwellen in vorteilhafter Weise durch die Steuerung des Leitungsfaktorkorrekturfilters des Verdichters zu kompensieren.

Auf diese Weise kann das Verdichtersystem normative Vorgaben beim Abgreifen des elektrischen Stroms von der Netzstromquelle einhalten, ohne dass der weitere Verbraucher konstruktiv verändert oder um zusätzliche Komponenten, wie beispielsweise dissipative Elemente, ergänzt werden muss.

Insoweit wird ein effizient betreibbares Verdichtersystem bereitgestellt, bei dem insbesondere Energieverluste gering gehalten werden können.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Liste der Bezugszeichen

- 1: Verdichter
- 2: weiterer Verbraucher
- 11: Elektromotor
- 12: Wechselrichter
- 13: Leistungsfaktorkorrekturfilter
- 14: Steuervorrichtung
- 15: Strommessmittel am Netzanschlusspunkt (Spannungsmessmittel)
- 21: Gleichrichter des weiteren Verbrauchers
- 22: DC-Last
- 23: Betriebsdatenbereitstellungseinheit
- 24: Induktivität
- 131: Gleichrichter
- 132: Aufwärtswandler
- 133: erstes Strommessmittel des Leistungsfaktorkorrekturfilters
- 134: zweites Strommessmittel des Leistungsfaktorkorrekturfilters (Spannungsmessmittel)
- 135: Totem-Pole PFC Konverter
- 141: Spannungsregler
- 142: Stromstärkenregler
- 143: Berechnungsmodelleinheit
- 144: Kompensationseinheit
- 145: PWM Berechnungseinheit
- 301: Diode
- 302: Transistor (MOSFET)
- 1000: Verdichtersystem
- 2000: Netzanschlusspunkt

## Patentansprüche

1. Verfahren zum Steuern eines Verdichtersystems (1000), das insbesondere Teil eines Kältekreislaufsystems ist, und das einen elektrisch betriebenen Verdichter (1), der zum Verdichten eines Arbeitsmediums eingerichtet ist, und einen weiteren elektrischen Verbraucher (2) umfasst,
wobei der Verdichter (1) wiederum umfasst:
- einen Elektromotor (11) zum Bereitstellen einer mechanischen Bewegung zum Verdichten des Arbeitsmediums;
- einen Wechselrichter (12), der den Elektromotor (11) mit ein- oder mehrphasigem Wechselstrom versorgt; und
- einen Leistungsfaktorkorrekturfilter (13), der den Wechselrichter (12) mit Gleichstrom versorgt und dessen Stromeingang zur Energieversorgung des Verdichters (1) mit einem Netzanschlusspunkt (2000) einer Wechselstrom-bereitstellenden Netzstromquelle verbunden ist;
und der weitere elektrische Verbraucher (2) zur Energieversorgung an dem selben Netzanschlusspunkt (2000) angeschlossen ist wie der Leistungsfaktorkorrekturfilter (13),
wobei das Verfahren umfasst:
- Betreiben des Verdichtersystems (1000) mit elektrischem Strom aus der Netzstromquelle;
- Ermitteln zumindest eines Stromkennwerts des weiteren Verbrauchers (2), der eine Stromaufnahme des weiteren Verbrauchers (2) beschreibt; und
- Steuern des Leistungsfaktorkorrekturfilters (13) des Verdichters (1) zumindest in Abhängigkeit des ermittelten zumindest einen Stromkennwerts des weiteren Verbrauchers (2).

2. Verfahren nach Anspruch 1, wobei
das Steuern des Leistungsfaktorkorrekturfilters (13) umfasst:
- Einstellen eines Betriebsparameters des Leistungsfaktorkorrekturfilters (13), der den vom Leistungsfaktorkorrekturfilter (13) ausgegebenen Gleichstrom bestimmt und/oder der den von der Netzstromquelle durch den Verdichter (1) abgegriffenen Wechselstrom beeinflusst, zumindest in Abhängigkeit des ermittelten zumindest einen Stromkennwerts des weiteren Verbrauchers (2).

3. Verfahren nach Anspruch 2, wobei
der Leistungsfaktorkorrekturfilter (13) mindestens eine Transistoreinheit umfasst, insbesondere einen MOSFET (302) oder einen IGBT, und das Einstellen des Betriebsparameters des Leistungsfaktorkorrekturfilter (13) zum Steuern des Leistungsfaktorkorrekturfilters (13) wiederum umfasst:
- Einstellen eines Steuersignals der mindestens einen Transistoreinheit zumindest in Abhängigkeit des ermittelten zumindest einen Stromkennwerts des weiteren Verbrauchers (2).

4. Verfahren nach einem der Ansprüche 1 bis 3, wobei
der ermittelte zumindest eine Stromkennwert eine elektrische Stromstärke, insbesondere eine effektive elektrische Stromstärke, oder eine elektrische Leistung, insbesondere eine effektive elektrische Leistung ist.

5. Verfahren nach einem der Ansprüche 1 bis 4, wobei
der weitere Verbraucher (2) und der Verdichter (1) zueinander in einer Parallelschaltung am Netzanschlusspunkt (2000) angeschlossen sind.

6. Verfahren nach einem der Ansprüche 1 bis 5, wobei
das Ermitteln des zumindest einen Stromkennwerts des weiteren Verbrauchers (2) umfasst:
- Erfassen einer Stromgröße eines an einem Stromeingang des weiteren Verbrauchers (2) anliegenden elektrischen Stroms, insbesondere einer Stromstärke;
- Ermitteln des zumindest einen Stromkennwerts auf Basis der erfassten Stromgröße.

7. Verfahren nach einem der Ansprüche 1 bis 5, wobei
das Ermitteln des zumindest einen Stromkennwerts des weiteren Verbrauchers (2) umfasst:
- Bereitstellen eines Berechnungsmodells, das den elektrischen Aufbau des weiteren Verbrauchers (2), umfassend ein oder mehrere elektrische Kenngrößen des weiteren Verbrauchers (2), beschreibt;
- Berechnen des zumindest einen Stromkennwerts auf Basis des bereitgestellten Berechnungsmodells;
- Ausgeben des berechneten zumindest einen Stromkennwerts als ermittelter Stromkennwert des weiteren Verbrauchers (2).

8. Verfahren nach einem der Ansprüche 1 bis 7, wobei
der Leistungsfaktorkorrekturfilter (13) einen Gleichrichter (131) mit einem Eingang für Wechselstrom und einem Ausgang für gleichgerichteten Ausgangsstrom umfasst, insbesondere handelt es sich um einen Brückengleichrichter.

9. Verfahren nach Anspruch 8, wobei
das Verfahren weiterhin umfasst:
- Erfassen einer Stromgröße eines Ausgangsstroms des Gleichrichters (131) am Ausgang des Gleichrichters (131), insbesondere einer Stromstärke oder einer Spannung;
wobei das Steuern des Leistungsfaktorkorrekturfilters (13) des Verdichters (1) in zusätzlicher Abhängigkeit von der erfassten Stromgröße des Ausgangsstroms des Gleichrichters (131) erfolgt.

10. Verfahren nach einem der Ansprüche 1 bis 7, wobei
der Leistungsfaktorkorrekturfilter (13) einen Totem-Pole PFC Konverter (135) umfasst

11. Verfahren nach Anspruch 10, wobei
das Verfahren weiterhin umfasst:
- Erfassen einer Stromgröße eines Eingangsstroms des Totem-Pole PFC Konverters (135), insbesondere einer Stromstärke oder einer Spannung,
wobei das Steuern des Leistungsfaktorkorrekturfilters (13) des Verdichters (1) in zusätzlicher Abhängigkeit von der erfassten Stromgröße des Eingangsstroms des Totem-Pole PFC Konverters (135) erfolgt.

12. Verfahren nach einem der Ansprüche 1 bis 11, wobei
das Verfahren weiterhin umfasst:
- Erfassen einer Stromgröße eines an dem Stromeingang des Leistungsfaktorkorrekturfilters (13) anliegenden elektrischen Stroms, insbesondere einer Stromstärke oder einer Spannung;
wobei das Steuern des Leistungsfaktorkorrekturfilters (13) des Verdichters (1) in zusätzlicher Abhängigkeit von der erfassten Stromgröße des am Stromeingang des Leistungsfaktorkorrekturfilters (13) anliegenden elektrischen Stroms erfolgt.

13. Verfahren nach einem der Ansprüche 1 bis 12, wobei
das Steuern des Leistungsfaktorkorrekturfilters (13) unter der Maßgabe erfolgt, dass ein oder mehrere Kennwerte eines vom Verdichtersystem (1000) am Netzanschlusspunkt (2000) abgegriffenen elektrischen Stroms unterhalb eines jeweils vorgegebenen Grenzwerts liegen,
vorzugsweise handelt es sich bei den ein oder mehreren Kennwerte um Amplitudenwerte aus einem Frequenzspektrum des abgegriffenen elektrischen Stroms, insbesondere um Amplitudenwerte für Frequenzen, die einem ganzzahligen Vielfachen der Grundfrequenz der Netzstromquelle entsprechen.

14. Verfahren nach einem der Ansprüche 1 bis 13,
wobei das Verdichtersystem (1000) als Teil eines Kältekreislaufsystems ausgeführt ist, bei dem es sich insbesondere um eine Wärmepumpe oder um eine Kältemaschine handelt, und das Verfahren ein Verfahren zum Steuern des Kältekreislaufsystems ist.

15. Verdichter (1) zum Verdichten eines Arbeitsmediums, umfassend:
- einen Elektromotor (11) zum Bereitstellen einer mechanischen Bewegung zum Verdichten des Arbeitsmediums;
- einen Wechselrichter (12), der den Elektromotor (11) mit ein- oder mehrphasigem Wechselstrom versorgt;
- einen Leistungsfaktorkorrekturfilter (13), der den Wechselrichter (12) mit Gleichstrom versorgt und dessen Stromeingang zur Energieversorgung des Verdichters (1) mit einem Netzanschlusspunkt (2000) einer Wechselstrom-bereitstellenden Netzstromquelle verbindbar ist;
- eine Steuervorrichtung (14), die zumindest zum Steuern des Leistungsfaktorkorrekturfilters (13) eingerichtet ist;
wobei der Verdichter (1) elektrisch betrieben wird und im Falle, dass der Verdichter (1) und ein weiterer elektrischer Verbraucher (2) an dem selben Netzanschlusspunkt (2000) einer Wechselstrom-bereitstellenden Netzstromquelle angeschlossen sind, die Steuervorrichtung (14) eingerichtet ist, zumindest einen Stromkennwert des weiteren Verbrauchers (2), der eine Stromaufnahme des weiteren Verbrauchers (2) beschreibt, zu ermitteln und den Leistungsfaktorkorrekturfilter (13) zumindest in Abhängigkeit des ermittelten zumindest einen Stromkennwerts des weiteren Verbrauchers (2) zu steuern.

16. Verdichtersystem (1000), das insbesondere Teil eines Kältekreislaufsystems ist, umfassend:
- eine elektrisch betriebenen Verdichter (1) zum Verdichten eines Arbeitsmediums nach Anspruch 15; und
- einen weiteren elektrischen Verbraucher (2);
wobei der Verdichter (1) und der weitere Verbraucher (2) vorgesehen sind, an einem selben Netzanschlusspunkt (2000) einer Wechselstrom-bereitstellenden Netzstromquelle angeschlossen zu werden, insbesondere in Form einer Parallelschaltung, wobei für diesen Fall die Steuervorrichtung (14) des Verdichters (1) eingerichtet ist, zumindest einen Stromkennwert des weiteren Verbrauchers (2), der eine Stromaufnahme des weiteren Verbrauchers (2) beschreibt, zu ermitteln und den Leistungsfaktorkorrekturfilter (13) zumindest in Abhängigkeit des ermittelten zumindest einen Stromkennwerts des weiteren Verbrauchers (2) zu steuern, wobei der weitere elektrische Verbraucher (2) vorzugsweise einen Gleichrichter (21), insbesondere einen passiven Gleichrichter, und eine DC-Last (22) umfasst

17. Kältekreislaufsystem zur Durchführung eines Kältekreisprozesses auf Basis eines Arbeitsmediums, wobei es sich bei dem Kältekreislaufsystem insbesondere um eine Wärmepumpe oder um eine Kältemaschine handelt, umfassend ein Verdichtersystem (1000) nach Anspruch 16, dessen Verdichter (1) zum Verdichten eines Arbeitsmediums des Kältekreislaufsystems eingerichtet ist.
